# EUROPEAN PATENT APPLICATION

(11) **EP 3 343 011 A1**
(43) Date of publication of application: **04.07.2018**
(21) Application number: 16838994.8
(22) Date of filing: 25.07.2016
(51) Int. Cl.: F02M 26/03, F02D 21/08, F02D 23/00

(54) **CONTROL DEVICE**

(30) Priority: 25.08.2015 JP 2015165361
(71) Applicant: Hitachi Automotive Systems, Ltd., Hitachinaka-shi, Ibaraki 312-8503, (JP)
(72) Inventor: OGATA Kenichiro, Hitachinaka-shi, Ibaraki 312-8503 (JP); ARIHARA Yoshinobu, Hitachinaka-shi, Ibaraki 312-8503 (JP); SARUWATARI Masayuki, Hitachinaka-shi, Ibaraki 312-8503 (JP)
(74) Representative: Beetz & Partner mbB
(86) International application number: PCT/JP2016/071664
(87) International publication number: WO 2017/033647

(57) **Abstract**

An engine control device capable of reducing or eliminating dew condensation in an exhaust return pipe and the like is provided. A control device according to the present invention controls an engine including an exhaust gas return mechanism that returns exhaust gas from an exhaust pipe to an intake pipe, and having a compressor in the intake pipe. The control device controls the exhaust gas return mechanism based on a pressure and on a humidity in the intake pipe.

## Description

### Technical Field

The present invention relates to a control device included in an automobile or the like.

### Background Art

Improved efficiency and improved exhaust gas cleanliness are demanded of a today's automobile from the viewpoint of environmental protection and of energy saving. Examples of efficiency improvement technique include improvement of engine structure by downsizing, reduction in the number of cylinders, improvement in compression ratio, and the like. Since downsizing causes an increase in the temperature of the fuel-air mixture in the combustion chamber, and thus facilitates abnormal combustion, a technique of exhaust gas recirculation (EGR) is used to reduce the temperature of the fuel-air mixture in the combustion chamber thereby to reduce or eliminate abnormal combustion.

In an EGR system, circulated gas contains water vapor, which may cause dew condensation upon merging with fresh air and thus mixing with water vapor in the air. This may cause corrosion and/or degradation of pipework and the like; ignition failure induced by spark plug fouling or the like caused by inflow into the combustion chamber; and furthermore, a misfire event or the like in which combustion fails.

PTL 1 described below discloses a technology having an object to "avoid the occurrence of dew condensation in an intercooler or upon merging of EGR gas flowing through an EGR passage with intake fresh air flowing through an intake passage" (see Abstract thereof). The technology described in that literature is configured to "include a low-pressure EGR cooler 48 disposed in a low-pressure EGR passage 44 that takes in low-pressure EGR gas, which constitutes a portion of exhaust gas, from an exhaust pipe 34 of an internal combustion engine 14, and recirculates the low-pressure EGR gas to an intake pipe 22, where the low-pressure EGR cooler 48 cools the low-pressure EGR gas; a condensate water trap means 50 that traps condensate water generated by being cooled; and an EGR heater 52 disposed in the low-pressure EGR passage 44 downstream of the condensate water trap means 50, where the EGR heater 52 heats, to a predetermined temperature, the low-pressure EGR gas cooled by the low-pressure EGR cooler 48" (see Abstract thereof). The technology described in that literature is described as "cooling means provided upstream of an EGR passage cools exhaust gas flowing through the EGR passage (EGR gas); condensate water generated by the cooling action is removed and drained through moisture collection means; and furthermore, the exhaust gas flowing through the EGR passage (EGR gas) is heated, to a predetermined temperature, by heating means provided downstream of the EGR passage to have a reduced humidity. Therefore, even upon merging, at the merging point, with intake fresh air having a high humidity and a low temperature taken in through the intake passage, heating to a temperature higher than the temperature of the EGR gas cooled by the cooling means of the EGR passage allows the occurrence of dew condensation in the intake passage downstream of the merging point to be suitably reduced or eliminated. As a result, the present invention can suitably avoid, for example, a defect in which an element in the intake system, including a supercharger, an intercooler, and/or the like, is eroded by condensate water" (see paragraph 0010 thereof).

### Citation List

### Patent Literature

PTL 1: JP 2009-174444 A

### Summary of Invention

### Technical Problem

In the configuration described in PTL 1 described above, compression of the fuel-air mixture at a location downstream of the compressor increases the relative humidity of the fuel-air mixture. This hinders reduction or elimination of dew condensation against an increase or decrease of the pressure, making it difficult to completely eliminating occurrence of corrosion and/or degradation of pipework and the like; ignition failure induced by spark plug fouling or the like caused by inflow into the combustion chamber; and furthermore, a misfire event or the like in which combustion fails.

The present invention has been made in view of the foregoing, and it is an object to provide an engine control device capable of reducing or eliminating dew condensation in an exhaust return pipe and/or the like.

### Solution to Problem

A control device according to the present invention controls an engine including an exhaust gas return mechanism that returns exhaust gas from an exhaust pipe to an intake pipe, and having a compressor in the intake pipe. The control device controls the exhaust gas return mechanism based on a pressure and on a humidity in the intake pipe.

### Advantageous Effects of Invention

A control device according to the present invention controls the exhaust gas return mechanism based on a pressure and on a humidity in the intake pipe, and can thus suitably determine the dew condensation condition in the intake pipe thereby to control the exhaust gas return mechanism to reduce or eliminate dew condensation.

### Brief Description of Drawings

[FIG. 1] FIG. 1 is a system configuration diagram of an automobile engine system according to an embodiment.
[FIG. 2] FIG. 2 is a system block diagram illustrating a configuration of an ECU 1.
[FIG. 3] FIG. 3 is a set of characteristic charts respectively of an intake pipe pressure sensor 12, of an intake air temperature/humidity sensor 6, and of a cooling water temperature sensor 42.
[FIG. 4] FIG. 4 is an operational logic diagram for explaining a procedure of a CPU 50e for computing a driving mode of a vehicle.
[FIG. 5] FIG. 5 is a set of characteristic charts respectively of computation logics of the computation components illustrated in FIG. 4.
[FIG. 6] FIG. 6 is a decision table used in determination of a driving mode MD by a driving mode determination component.
[FIG. 7] FIG. 7 is an operational logic diagram for explaining a procedure of the CPU 50e for computing control values.
[FIG. 8] FIG. 8 is a set of computation characteristic diagrams respectively of a requested-output computation component and of an EGR rate target value computation component.
[FIG. 9] FIG. 9 is an operational logic diagram for explaining a procedure of a control value computation component for computing control values based on the driving mode and on respective target value computation results.
[FIG. 10] FIG. 10 is a set of computation characteristic diagrams on computation, by an EGR control computation component, of an EGR valve opening degree (hereinafter, position value) EVO.
[FIG. 11] FIG. 11 is a flowchart illustrating a control computation operation performed by the CPU 50e.
[FIG. 12] FIG. 12 is a time chart illustrating a change over time of each signal value in a prohibited mode.
[FIG. 13] FIG. 13 is a time chart illustrating a change over time of each signal value in a permitted mode.

### Description of Embodiments

### <Configuration of engine control device>

A control device for an engine according to an embodiment of the present invention will be described below. It is assumed herein that the engine is an engine for an automobile, having an exhaust gas return mechanism that returns exhaust gas from an exhaust pipe to an intake pipe, and having a compressor in the intake pipe.

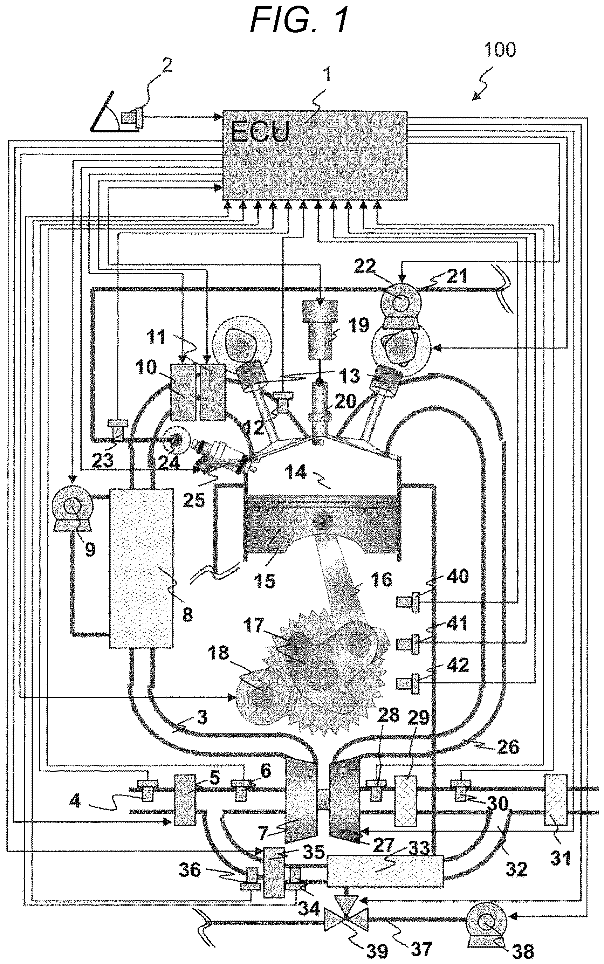

FIG. 1 is a system configuration diagram of an automobile engine system according to this embodiment. The electronic control unit (ECU) 1 is a control device according to this embodiment. The accelerator pedal position sensor 2 is a sensor for detecting a position of an accelerator pedal provided in that automobile. The engine 100 is an engine for an automobile that provides spark ignition combustion or compression self-ignition combustion.

The engine 100 includes an intake pipe 3 and an exhaust pipe 26. The intake pipe 3 includes an air flow sensor 4 that measures an amount of intake air, a regulating valve 5 that regulates a passage area of the intake pipe 3, and an intake air temperature/humidity sensor 6 that measures an intake air temperature or an intake air humidity. The intake pipe 3 further includes a compressor 7 that adjusts a pressure condition of fuel-air mixture, and an intercooler 8 that adjusts the temperature of fuel-air mixture. The temperature of the fuel-air mixture whose pressure condition has been adjusted is then adjusted during passage though the intercooler 8. The intercooler 8 may be of an air-cooling type, may be of a water-cooling type that uses a temperature-regulating pump 9 having therein a coolant, or may be a combination thereof. After passing through the intercooler 8, the fuel-air mixture passes through a throttle 10 and a tumble valve 11 both included in the intake pipe 3 to have the flow rate and the fluidic motion thereof adjusted respectively. The fuel-air mixture then flows from the one in the intake side of variable intake/exhaust lift valves 13, included in the intake pipe 3, into the combustion chamber 14.

An injector 25 provided at an appropriate location in the combustion chamber 14 supplies fuel to the fuel-air mixture that has flown into the combustion chamber 14. The injector 25 is mounted on a common rail 24. A fuel pipe 21 is connected to the common rail 24 at an appropriate location. The fuel pipe 21 includes a fuel pressure sensor 23 at an appropriate location. The fuel pressure sensor 23 may have a function to measure a temperature and/or the like. The fuel pipe 21 includes a fuel pump 22 at an appropriate location. The fuel pump 22 is driven by electrical or mechanical power. Although the fuel pump 22 in this embodiment is mechanically driven through a camshaft provided on the exhaust lift valve of the variable intake/exhaust lift valves 13, but the fuel pump 22 is not limited thereto, and may be driven by other power such as an electric motor.

The combustion chamber 14 includes an ignition plug 20 at an appropriate location. The ignition plug 20 may include a sensor that measures a pressure in the combustion chamber 14, or a sensor that measures the amount of ions generated during combustion in the combustion chamber 14. These sensors may be provided at any location if these sensors protrude from an inner wall of the combustion chamber 14. The ignition plug 20 is connected to an ignition coil 19 using a wire. Energy emitted by the ignition coil 19 is supplied to the combustion chamber 14 through the ignition plug 20, and is thus used to ignite the fuel-air mixture. The fuel-air mixture burns upon ignition, which increases the pressure in the combustion chamber 14, thereby pressing down the piston 15. The energy used for pressing down the piston 15 is transmitted, by the connecting rod 16, to the crankshaft 17, and is then converted to kinetic energy of the vehicle that includes the engine 100.

The crankshaft 17 or the connecting rod 16 may have a mechanism to adjust the reciprocation distance of the piston 15. For example, an adjustment mechanism, such as a control shaft 18, may be provided in the engine 100 at an appropriate location. A crank angle sensor 40 is provided at an appropriate location of the crankshaft 17. The engine 100 further includes a knock sensor 41 and a cooling water temperature sensor 42 at appropriate locations.

The exhaust gas after combustion flows through the variable intake/exhaust lift valve 13 into the exhaust pipe 26, and thus supplies energy to the turbine 27 disposed at an appropriate location of the exhaust pipe 26. The turbine 27 includes, at an appropriate location, a wastegate capable of adjusting the amount of the exhaust gas flowing into the turbine 27. This wastegate can be electrically or mechanically opened and closed. The exhaust gas that has supplied energy to the turbine 27 is measured by an air-fuel ratio sensor 28 provided at an appropriate location of the exhaust pipe 26, passes through catalyst 29, and is thus purified. The purified exhaust gas has the temperature thereof measured by an exhaust temperature sensor 30 provided at an appropriate location of the exhaust pipe 26, and is purified again by the catalyst 31. Although this embodiment includes multiple catalyst elements, the number of catalyst elements is not limited to that of this embodiment, and one or more catalyst elements can be provided at appropriate locations.

The exhaust return pipe 32 attached to the exhaust pipe 26 is a pipe for drawing out the exhaust gas from the exhaust pipe 26 and returning the exhaust gas as the return gas. The drawn-out return gas has the temperature thereof regulated by an EGR cooler 33 provided at an appropriate location of the exhaust return pipe 32. The EGR cooler 33 regulates the temperature of the return gas by air-cooling, water-cooling, or power generation/heat absorption. In this embodiment, the EGR cooler 33 is supplied with a coolant. The engine 100 includes, at an appropriate location, a cooling water pump 38 for regulating the flow rate and the like of this coolant. A cooling water pipe 37 is connected to the cooling water pump 38, and the cooling water pipe 37 includes, at an appropriate location, a cooling water passage switching valve 39 for making an adjustment for the coolant passage. The return gas whose temperature has been regulated undergoes measurement of the pressure thereof and the like by EGR pressure sensors 34 and 36, and also has the flow rate thereof regulated by an EGR valve 35. The return gas whose flow rate has been regulated flows into the intake pipe 3 connected to the exhaust return pipe 32.

The ECU 1 receives detection signals from the accelerator pedal position sensor 2, the air flow sensor 4, the intake air temperature/humidity sensor 6, the intake pipe pressure sensor 12, a combustion chamber pressure sensor or an ion current sensor, the fuel pressure sensor 23, the air-fuel ratio sensor 28, the exhaust temperature sensor 30, the EGR pressure sensors 34 and 36, the crank angle sensor 40, the knock sensor 41, the cooling water temperature sensor 42, and the like. In response to these signals received, the ECU 1 controls the regulating valve 5, the temperature-regulating pump 9, the throttle 10, the tumble valve 11, the variable intake/exhaust lift valves 13, the control shaft 18, the ignition coil 19, the fuel pump 22, the injector 25, the turbine 27, the EGR valve 35, the cooling water pump 38, the cooling water passage switching valve 39, and the like.

In addition to the components described above, the engine 100 may include other sensors and/or actuators. The engine 100 is installed in an automobile, and the ECU 1 receives information on running condition of the automobile. The ECU 1 can receive detection signals, directly or via other control device, from (a) a vehicle speed sensor attached to a body including the engine 100 or to a wheel; (b) a sensor that measures the acceleration or angle of the body; (c) a gearshift position sensor that detects the position of the gearshift for controlling the transmission attached to the body including the engine 100; and the like. Furthermore, the ECU 1 can also receive information on the driver or on a passenger (or passengers) in that automobile.

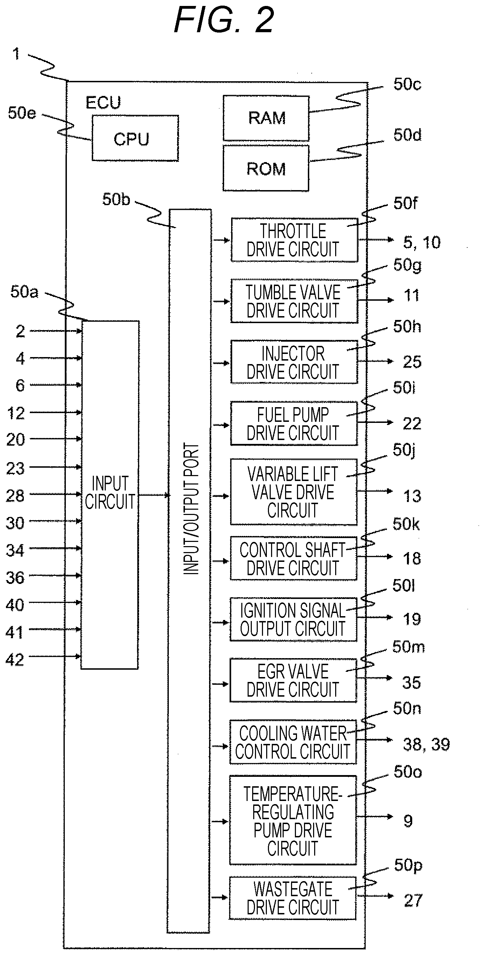

FIG. 2 is a system block diagram illustrating a configuration of the ECU 1. The detection signals from the accelerator pedal position sensor 2, the air flow sensor 4, the intake air temperature/humidity sensor 6, the intake pipe pressure sensor 12, the combustion chamber pressure sensor or the ion current sensor included in the ignition plug 20, the fuel pressure sensor 23, the air-fuel ratio sensor 28, the exhaust temperature sensor 30, the EGR pressure sensors 34 and 36, the crank angle sensor 40, the knock sensor 41, the cooling water temperature sensor 42, and the like, are input to an input circuit 50a of the ECU 1. The signals input respectively from the sensors are transferred to an input/output port 50b.

A signal transferred to the input/output port 50b is stored in a RAM 50c as a signal value, and the CPU 50e performs computation processing using this signal value. A control program describing how the computation processing is performed by the CPU 50e is previously stored in a ROM 50d. The value, obtained by computation according to the control program, that represents an amount of control of each actuator is once stored in the RAM 50c, and is then transferred to a corresponding actuator through the input/output port 50b and through a corresponding drive circuit. Note that, for purposes of illustration, the description below may be given as if the control program performs the process, but in effect, it is the CPU 50e that actually performs the control program.

In this embodiment, the ECU 1 includes the following drive circuits: a throttle drive circuit 50f, a tumble valve drive circuit 50g, an injector drive circuit 50h, a fuel pump drive circuit 50i, a variable lift valve drive circuit 50j, a control shaft drive circuit 50k, an ignition signal output circuit 501, an EGR valve drive circuit 50m, a cooling water control circuit 50n, a temperature-regulating pump drive circuit 50o, and a wastegate drive circuit 50p. These drive circuits control the following components: the regulating valve 5, the temperature-regulating pump 9, the throttle 10, the tumble valve 11, the variable intake/exhaust lift valves 13, the control shaft 18, the ignition coil 19, the fuel pump 22, the injector 25, the turbine 27, the EGR valve 35, the cooling water pump 38, and the cooling water passage switching valve 39. This embodiment assumes that the ECU 1 includes these drive circuits, but the configuration is not limited thereto, and one or more drive circuits may be disposed outside the ECU 1.

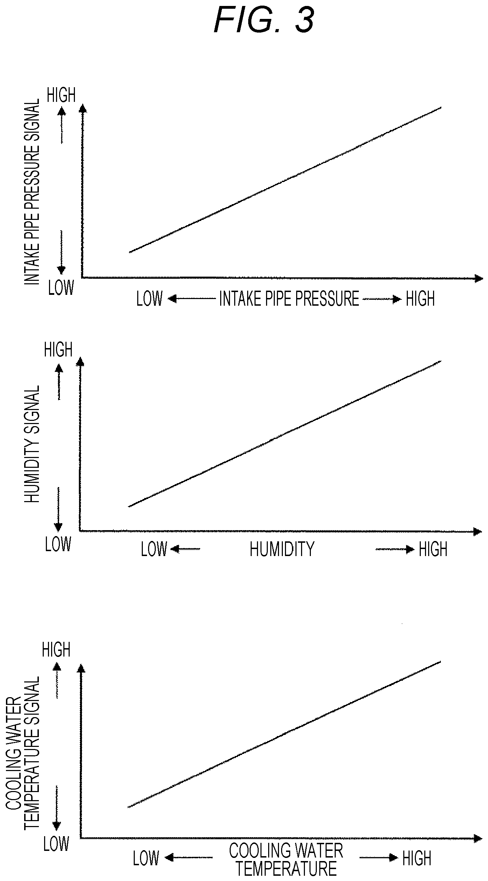

FIG. 3 is a set of characteristic charts respectively of the intake pipe pressure sensor 12, of the intake air temperature/humidity sensor 6, and of the cooling water temperature sensor 42. The top chart illustrates a characteristic of increase and decrease of an intake pipe pressure signal output by the intake pipe pressure sensor 12 with an increase and decrease of the intake pipe pressure. The middle chart illustrates a characteristic of increase and decrease of a humidity signal output by the intake air temperature/humidity sensor 6 with an increase and decrease of the humidity. The bottom chart illustrates a characteristic of increase and decrease of a cooling water temperature signal output by the cooling water temperature sensor 42 with an increase and decrease of the cooling water temperature. The signals from these sensors are herein configured to respectively increase with an increase in the intake pipe pressure, with an increase in the humidity, and with an increase in the cooling water temperature. However, the characteristics thereof are not limited thereto, and may also be configured to decrease therewith. It is understood that even if the characteristic of a sensor differs from the characteristic illustrated in FIG. 3, the control logic described below can be easily configured in accordance with the corresponding characteristic.

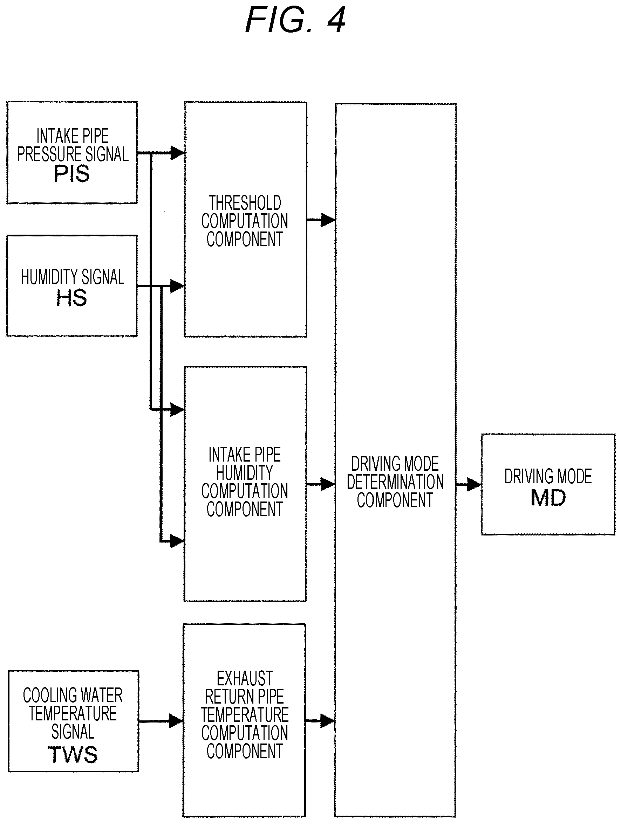

FIG. 4 is an operational logic diagram for explaining a procedure of the CPU 50e for computing the driving mode of the vehicle. The control program executed by the CPU 50e includes, as control blocks, a threshold computation component, an intake pipe humidity computation component, an exhaust return temperature computation component, and a driving mode determination component. Each of the threshold computation component and the intake pipe humidity computation component receives both an intake pipe pressure signal PIS and a humidity signal HS, and the exhaust return pipe humidity computation component receives a cooling water temperature signal TWS. The outputs of these computation components are input to the driving mode determination component. The driving mode determination component determines the driving mode MD of the vehicle based on these inputs. Thresholds output by the threshold computation component will be described later herein.

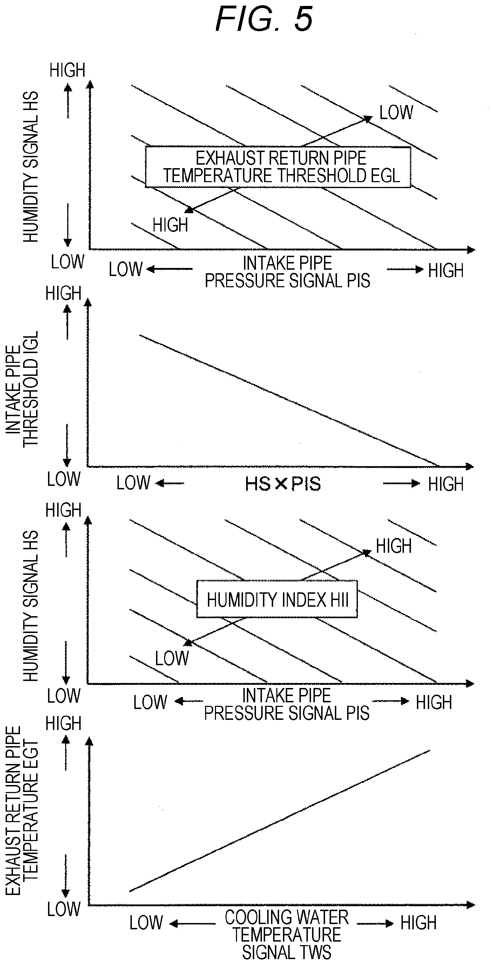

FIG. 5 is a set of characteristic charts respectively of computation logics of the computation components illustrated in FIG. 4. The top chart is a computation map for use by the threshold computation component in computing an exhaust return pipe temperature threshold EGL based on the intake pipe pressure signal PIS and on the humidity signal HS. The exhaust return pipe temperature threshold EGL decreases with an increase in the intake pipe pressure signal PIS and with an increase in the humidity signal HS. The second top chart is a characteristic chart of when the threshold computation component computes an intake pipe threshold IGL based on a product of the intake pipe pressure signal PIS and the humidity signal HS (HS x PIS). The intake pipe threshold IGL decreases with an increase in the value of the product of the intake pipe pressure signal PIS and the humidity signal HS. The second bottom chart is a characteristic chart of when the intake pipe humidity computation component computes a humidity index HII based on the intake pipe pressure signal PIS and on the humidity signal HS. The humidity index HII increases with an increase in the intake pipe pressure signal PIS and with an increase in the humidity signal HS. The humidity index HII is a value that implies the intake air humidity. The bottom chart is a characteristic chart of when the exhaust return pipe temperature computation component computes an exhaust return pipe temperature EGT based on the cooling water temperature signal TWS. The exhaust return pipe temperature EGT increases with an increase in the cooling water temperature signal TWS. If the characteristic of a sensor is modified, the characteristic of the corresponding computation component can be easily adjusted accordingly.

The characteristic described above is configured in advance so that the value of the product of the intake pipe pressure signal PIS and the humidity signal HS will be a value normalized by a predetermined value corresponding to a dew-condensed state, or by an appropriate reference value, in determination of the driving mode MD described later herein. The characteristic described above with respect to the exhaust return pipe temperature threshold EGL is desirably configured in advance so that a decrease, by half, in the physical quantity represented by the intake pipe pressure signal PIS will double the physical quantity represented by the humidity signal HS. This enables a dew condensation determination to be accurately performed based on changes in the pressure and in the humidity, thereby maximizing the effect of controlling the EGR valve performed thereafter, and thus maximizing the effect of reducing or eliminating component degradation and misfire due to dew condensation, and hence abnormal combustion.

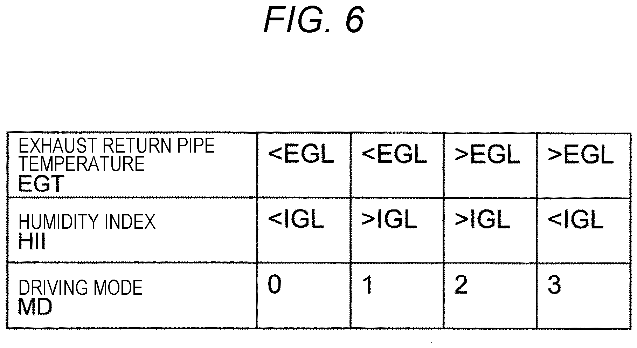

FIG. 6 is a decision table used in determination of the driving mode MD by the driving mode determination component. The driving mode determination component compares the exhaust return pipe temperature EGT with the exhaust return pipe temperature threshold EGL, and compares the humidity index HII with the intake pipe threshold IGL. If the exhaust return pipe temperature EGT is lower than the exhaust return pipe temperature threshold EGL, and the humidity index HII is lower than the intake pipe threshold IGL, the driving mode MD is determined as "0." If the exhaust return pipe temperature EGT is lower than the exhaust return pipe temperature threshold EGL, and the humidity index HII is higher than the intake pipe threshold IGL, the driving mode MD is determined as "1." If the exhaust return pipe temperature EGT is higher than the exhaust return pipe temperature threshold EGL, and the humidity index HII is higher than the intake pipe threshold IGL, the driving mode MD is determined as "2." If the exhaust return pipe temperature EGT is higher than the exhaust return pipe temperature threshold EGL, and the humidity index HII is lower than the intake pipe threshold IGL, the driving mode MD is determined as "3." The condition on a border between modes may be appropriately treated as being one of these modes.

The driving mode MD of "0" means that the exhaust return pipe temperature EGT is insufficient, and therefore dew condensation may occur in the exhaust return pipe 32 and the like. The driving mode MD of "1" means that the exhaust return pipe temperature EGT is insufficient, and therefore dew condensation may occur in the exhaust return pipe 32 and the like, and that the intake pipe humidity is high, therefore dew condensation may occur in the intake pipe 3 and the like. The driving mode MD of "2" means that the exhaust return pipe temperature EGT is sufficiently high such that dew condensation is unlikely to occur in the exhaust return pipe 32 and the like, but means that the intake pipe humidity is high, therefore dew condensation may occur in the intake pipe 3 and the like. The driving mode MD of "0" to "2" is a prohibited mode that prohibits EGR, which can prevent dew condensation, and thus reduce or eliminate component degradation, misfire, and the like.

The driving mode MD of "3" means that the exhaust return pipe temperature EGT is sufficiently high such that dew condensation is unlikely to occur in the exhaust return pipe 32 and the like, and that the intake pipe humidity is low such that dew condensation is unlikely to occur in the intake pipe 3 and the like. The driving mode MD of "3" is a permitted mode that permits EGR.

Use of these driving modes can avoid dew condensation, and thus reduce or eliminate component degradation and misfire, and also allows the EGR valve 35 to be smoothly opened to maximize the effect of reducing or eliminating abnormal combustion.

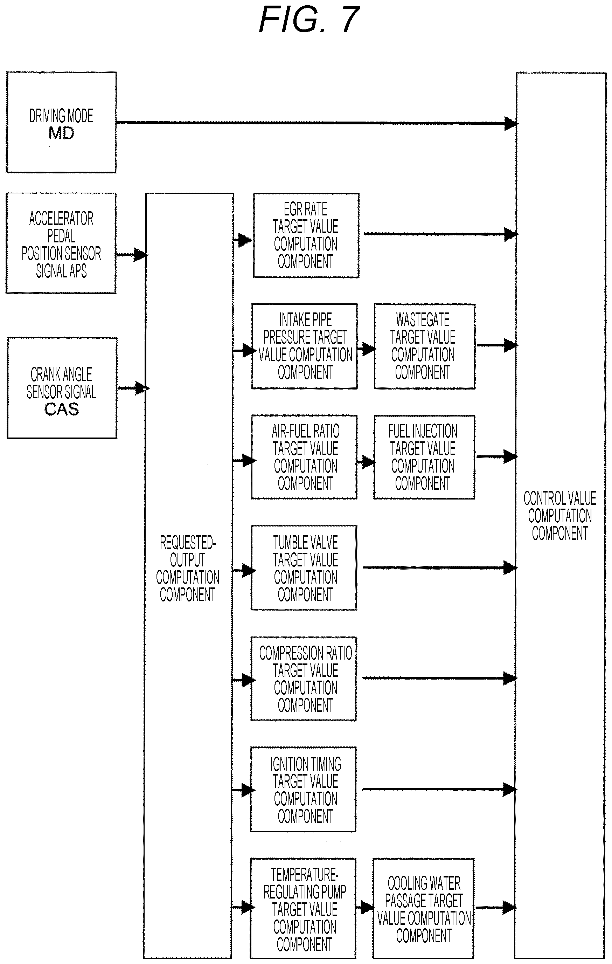

FIG. 7 is an operational logic diagram for explaining a procedure of the CPU 50e for computing control values. The control program executed by the CPU 50e includes, as control blocks, the following computation components. The driving mode MD signal is input to a control value computation component; and an accelerator pedal position sensor signal APS and a crank angle sensor signal CAS are input to a requested-output computation component. The requested-output computation component outputs a requested output to an EGR rate target value computation component, to an intake pipe pressure target value computation component, to a wastegate target value computation component, to an air-fuel ratio target value computation component, to a fuel injection target value computation component, to a tumble valve target value computation component, to a compression ratio target value computation component, to an ignition timing target value computation component, to a temperature-regulating pump target value computation component, and to a cooling water passage target value computation component; and each of the target value computation components computes a target value dependent on the requested output that has been correspondingly input. The outputs of the respective target value computation components are input to the control value computation component. The control value computation component computes or selects a suitable control value depending on the driving mode MD.

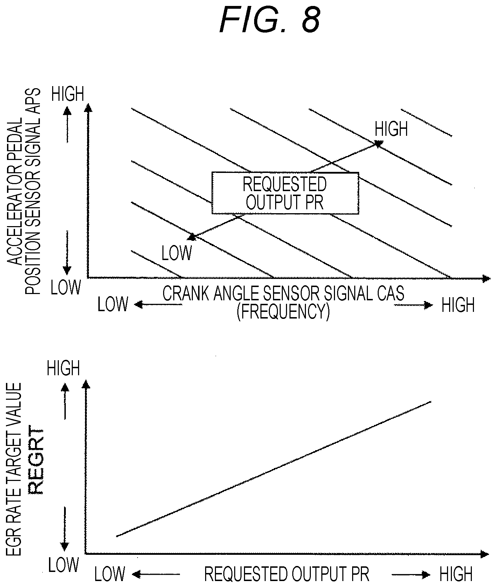

FIG. 8 is a set of computation characteristic diagrams respectively of the requested-output computation component and of the EGR rate target value computation component. The top chart illustrates a computational characteristic of the requested-output computation component. The requested-output computation component determines a requested output PR based on the frequency of the crank angle sensor signal CAS or the like, and on the value of the accelerator pedal position sensor signal APS. The requested output PR increases with an increase in the frequency of the crank angle sensor signal CAS or the like, and with an increase in the accelerator pedal position sensor signal APS. The computational characteristic of the requested-output computation component is not limited thereto, but, for example, a requested output PS or a requested torque may be computed only based on the accelerator pedal position sensor signal APS. If a requested torque is to be computed, the computation blocks can be easily modified to input the requested torque, instead of the requested output, to the target value computation components. The bottom chart illustrates a characteristic of an EGR rate target value REGRT with the requested output PR. The EGR rate target value computation component increases the EGR rate target value REGRT with an increase in the requested output PR.

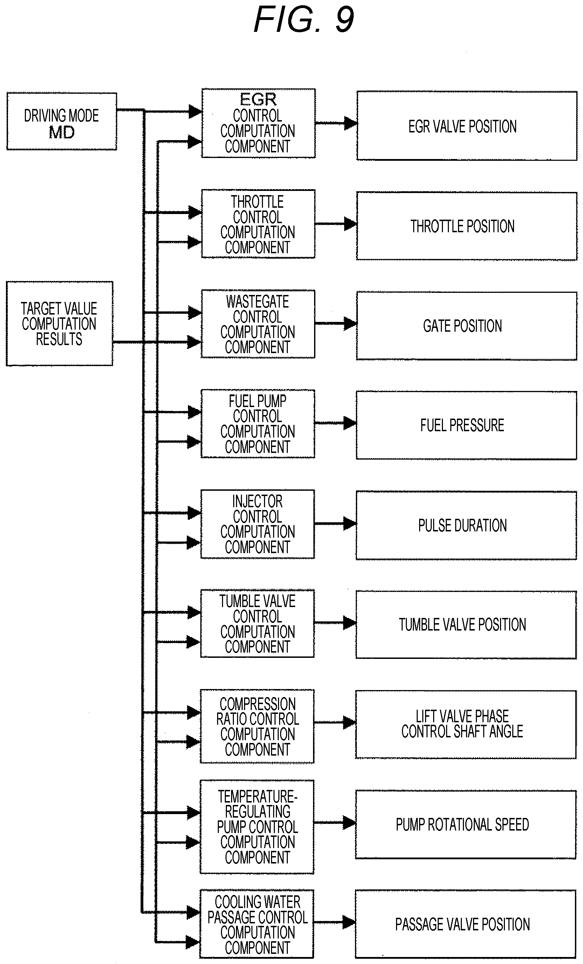

FIG. 9 is an operational logic diagram for explaining a procedure of the control value computation component for computing control values based on the driving mode and on respective target value computation results. The control program executed by the CPU 50e includes, as control blocks, the following computation components. The control value computation component receives the driving mode MD and target value computation results, and inputs the driving mode MD and the target value computation results correspondingly to an EGR control computation component, to a throttle control computation component, to a wastegate control computation component, to a fuel pump control computation component, to an injector control computation component, to a tumble valve control computation component, to a compression ratio control computation component, to a temperature-regulating pump control computation component, and to a cooling water passage control computation component. The computation components compute control values respectively based on the input values. Each of the computation results is output as a control quantity for driving a corresponding function unit included in the engine 100. Each of the drive circuits outputs a control signal according to the corresponding control quantity.

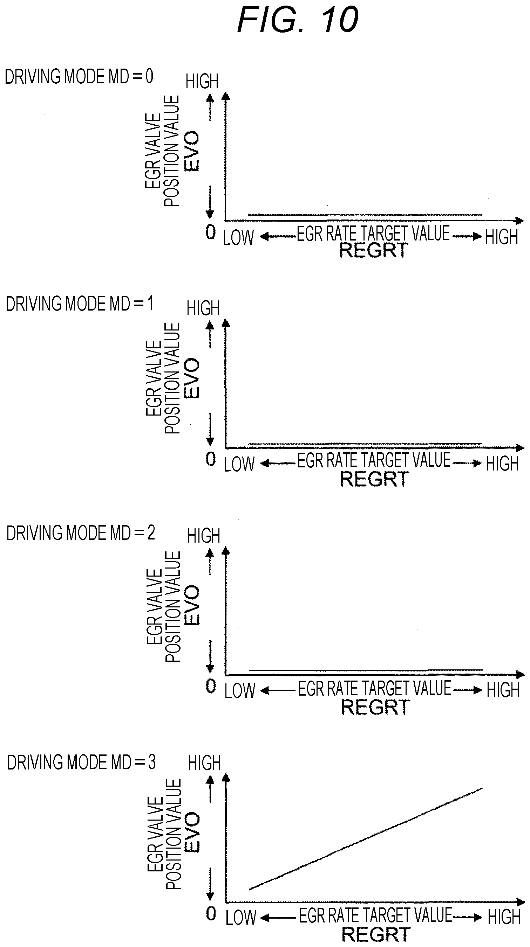

FIG. 10 is a set of computation characteristic diagrams on computation, by the EGR control computation component, of an EGR valve position value EVO. The EGR control computation component has a characteristic map defining a correspondence between the EGR rate target value REGRT and the EGR valve position value EVO, and obtains the EGR valve position value EVO according to this characteristic map. The EGR control computation component has multiple characteristic maps to use different characteristic maps for different driving modes MD. For example, in the driving mode MD of "0," "1," or "2" (prohibited mode), a characteristic map is used that will maintain the EGR valve position value EVO at "0" or near "0" even with an increase in the EGR rate target value REGRT. In addition, in the driving mode MD of "3" (permitted mode), a characteristic map is used that will increase the EGR valve position value EVO with an increase in the EGR rate target value REGRT. This configuration enables the EGR valve 35 to be controlled depending on whether the driving mode is the prohibited mode or the permitted mode.

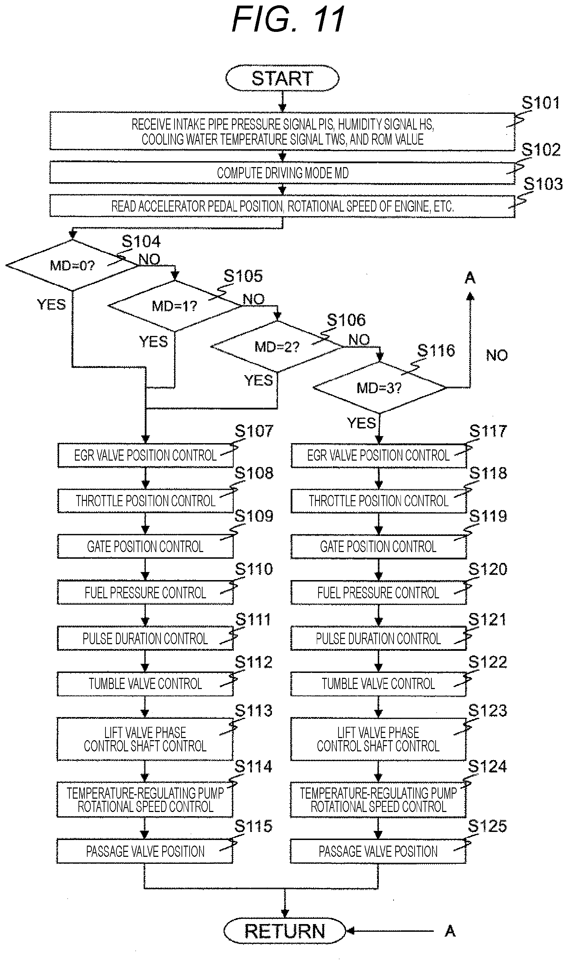

FIG. 11 is a flowchart illustrating a control computation operation performed by the CPU 50e. The CPU 50e repeatedly performs the control computation operations illustrated in FIGS. 4 and 7 to 10, for example, with a predetermined period. The steps of FIG. 11 will be described below.

### (FIG. 11: steps S101 to S102)

The CPU 50e receives signals such as the intake pipe pressure signal PIS, the humidity signal HS, the cooling water temperature signal TWS, a ROM value read-start instruction signal, an acceleration sensor signal, and a cooling water temperature signal, and reads values stored in the ROM 50d (S101). The CPU 50e computes the driving mode MD based on these signals and the like (S102). These steps correspond to the computation block illustrated in FIG. 4.

### (FIG. 11: step S103)

The CPU 50e reads the accelerator pedal position sensor signal APS, the rotational speed of the engine, the crank angle sensor signal CAS, and the like.

### (FIG. 11: step S104)

The CPU 50e determines whether the driving mode MD computed at step S102 is "0." If "0," the process proceeds to step S107; and if not "0," the process proceeds to step S105.

### (FIG. 11: step S105)

The CPU 50e determines whether the driving mode MD is "1." If "1," the process proceeds to step S107; and if not "1," the process proceeds to step S106.

### (FIG. 11: step S106)

The CPU 50e determines whether the driving mode MD is "2." If "2," the process proceeds to step S107; and if not "2," the process proceeds to step S116.

### (FIG. 11: steps S107 to S115)

The CPU 50e performs control computation operations of the respective computation components, illustrated in FIGS. 7 to 10. In these steps, the CPU 50e performs control computation operations corresponding to the driving modes MD of "0," "1," and "2" (prohibited mode). Accordingly, for example, the EGR control computation component sets the value of the EGR valve position value EVO to "0" or near "0" irrespective of the magnitude of the EGR rate target value REGRT. The other computation components each compute the corresponding control quantity based on the condition where the position value of the EGR will be "0" or near "0."

### (FIG. 11: step S116)

The CPU 50e determines whether the driving mode MD is "3." If "3," the process proceeds to step S117; and if not "3," the CPU 50e terminates the process of this flowchart.

### (FIG. 11: steps S117 to S125)

The CPU 50e performs control computation operations of the respective computation components, illustrated in FIGS. 7 to 10. In these steps, the CPU 50e performs control computation operations corresponding to the driving mode MD of "3" (permitted mode). Accordingly, for example, the EGR control computation component increases the EGR valve position value EVO with an increase in the EGR rate target value. The other computation components each compute the corresponding control quantity based on increase or decrease in the position value of the EGR.

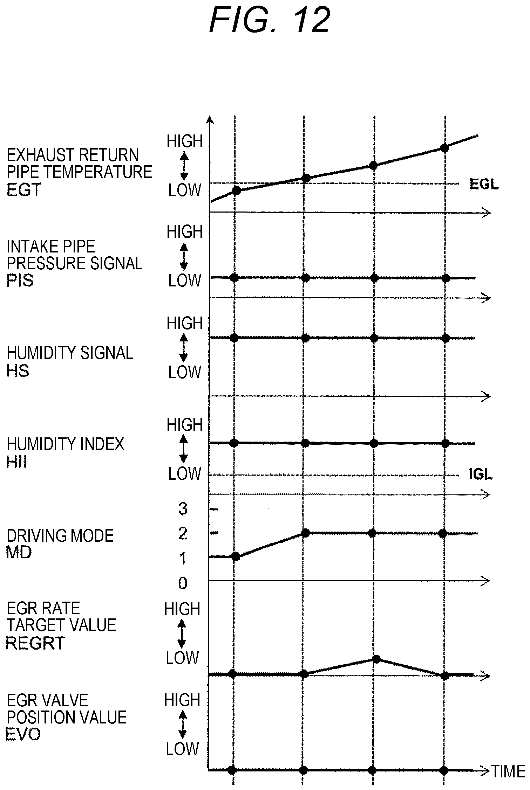

FIG. 12 is a time chart illustrating a change over time of each signal value in the prohibited mode. It is assumed here that the exhaust return pipe temperature EGT increases from below to above the exhaust return pipe temperature threshold EGL. It is also assumed here that the intake pipe pressure signal PIS and the humidity signal HS, and hence the humidity index HII based thereon, are kept constant, and that the humidity index HII is greater than the intake pipe threshold IGL. An increase in the exhaust return pipe temperature EGT to above the exhaust return pipe temperature threshold EGL causes the driving mode MD to change from "1" to "2." Since the driving mode MD is "1" or "2," and thus EGR is prohibited, the EGR valve position value EVO represents the closed position irrespective of an increase or decrease of the EGR rate target value REGRT. Due to this characteristic, the exhaust gas return mechanism can be optimally controlled depending on the pressure and on the humidity, thereby allowing occurrence of dew condensation in the intake pipe 3, the exhaust pipe 26, and the like to be reduced or eliminated, component degradation and misfire to be reduced or eliminated, and decrease/degradation in the fuel consumption, in the thermal efficiency, and in the exhaust gas of the engine to be reduced or eliminated.

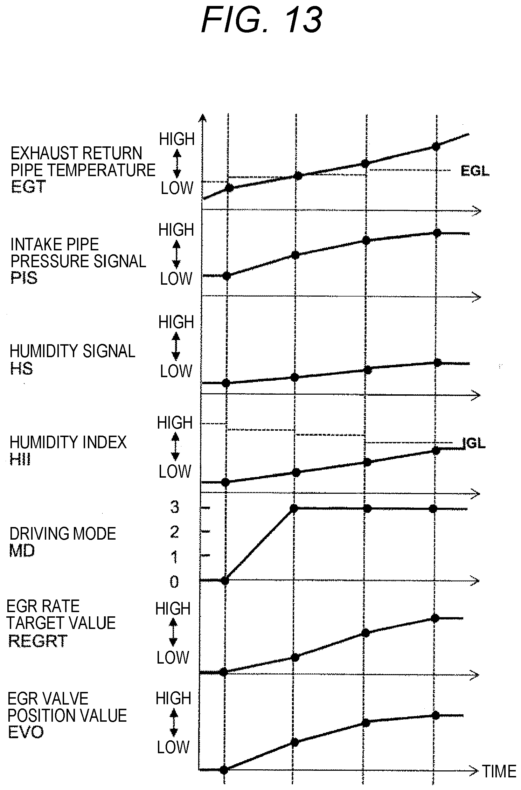

FIG. 13 is a time chart illustrating a change over time of each signal value in the permitted mode. It is assumed here that both the intake pipe pressure signal PIS and the humidity signal HS change over time. According to the characteristic chart illustrated in FIG. 5, an increase in the intake pipe pressure signal PIS causes the exhaust return pipe temperature threshold EGL to increase, and the intake pipe threshold IGL to decrease. When the exhaust return pipe temperature EGT is lower than the exhaust return pipe temperature threshold EGL, and the humidity index HII is lower than the intake pipe threshold IGL, the driving mode MD is "0."

When the exhaust return pipe temperature EGT increases to above the exhaust return pipe temperature threshold EGL while the humidity index HII is lower than the intake pipe threshold IGL, the driving mode MD becomes "3," and EGR is then permitted. In the permitted mode, an increase in the EGR rate target value REGRT results in an increase in the EGR valve position value EVO, which then causes the EGR rate or the EGR flow rate to increase. An increase in the EGR valve position value EVO causes the humidity signal HS to increase, thereby causing the intake pipe threshold IGL to decrease, and the humidity index HII to increase. However, reducing the EGR valve position value EVO so that the humidity index HII will decrease to below the intake pipe threshold IGL can maintain a maximum EGR rate or EGR flow rate near the dew condensation occurrence condition. Accordingly, the exhaust gas return mechanism can be optimally controlled depending on the pressure and on the humidity, thereby allowing occurrence of dew condensation in the intake pipe 3, the exhaust pipe 26, and the like to be reduced or eliminated, component degradation and misfire to be reduced or eliminated, and at the same time, the effect of reducing or eliminating abnormal combustion by increasing the EGR to be maximized. That is, the effect of improving the fuel consumption, the thermal efficiency, and the exhaust gas of the engine can be maximized.

In the permitted mode, a higher value of the intake pipe pressure signal PIS may cause dew condensation even at a low humidity. Even in such a case, similarly to the case described above, reduction of the EGR valve position value EVO can maintain a maximum EGR rate or EGR flow rate near the dew condensation occurrence condition.

### <Variations of the invention>

The present invention is not limited to the embodiment described above, but includes various variations. For example, the foregoing embodiment has been described in some detail for purposes of clarity of understanding of the present invention, and therefore the present invention is not limited to the configuration that includes all the components described.

The above description of the embodiment has described the input/output signals to and from the ECU 1, by way of example, as those illustrated in FIGS. 1 and 2. However, other signal may be input and/or output as appropriate, for example, depending on the configuration of the engine 100, and a control computation operation dependent on that signal may also be performed as appropriate.

The above description of the embodiment has described the control blocks included in the control program executed by the ECU 1, by way of example, as the target value computation components of FIG. 7 and as the computation components of FIG. 9. However, the computation components that should be included may be determined as appropriate depending on what control operations are executed by the ECU 1.

The above description of the embodiment has described an operation mode that prohibits EGR and an operation mode that permits EGR, by way of example. However, other operation mode than these (e.g., operation mode from the standpoint of fail safe operation) may also be used.

Although FIG. 1 illustrates the intake air temperature/humidity sensor 6 as being disposed between the joint of the intake pipe 3 and the exhaust return pipe 32, and the compressor 7, the intake air temperature/humidity sensor 6 may be disposed in other location upstream of the compressor 7. Irrespective of the location, a wired or wireless communication channel can be provided, as appropriate, that connects the intake air temperature/humidity sensor 6 with the ECU 1.

The units, functions, processing components, processing means, etc. described above may, wholly or partially, be implemented in hardware by, for example, designing with an integrated circuit. In addition, the units, functions, etc. described above may be implemented in software by interpreting and executing, by a processor, programs that provide respective functions. The programs and information such as tables and files for providing the functions can be stored in a recording device, such as a memory, a hard disk drive, or a solid state drive (SSD), or in a recording medium, such as an IC card, an SD card, or a DVD.

### <Summary of the invention>

The ECU 1 according to the present invention opens and closes the exhaust return pipe 32 depending on the pressure and on the humidity in the intake pipe 3 to reduce or eliminate occurrence of dew condensation in the intake pipe 3, the exhaust pipe 26, and the like. This configuration can reduce or eliminate occurrence of dew condensation and a defect induced by dew condensation even under conditions where the dew condensation occurrence condition varies with the pressure and the humidity of the fuel-air mixture.

The engine 100 according to the present invention includes a valve mechanism that controls opening and closing of the exhaust return pipe 32. This configuration enables the EGR flow rate to be controlled with high accuracy.

The engine 100 according to the present invention includes the exhaust return pipe 32 allowing the exhaust gas to return from the exhaust pipe 26 to a location upstream of the compressor 7. This configuration enables the EGR to return in the entire range of the intake air pressure from a negative pressure to a pressure at or above the atmospheric pressure, thereby maximizing the advantageous effect of the present invention.

The engine 100 according to the present invention uses the intake pipe pressure sensor 12 disposed downstream of the compressor 7 as the means for detecting the pressure in the intake pipe 3. This configuration enables the pressurization condition of the fuel-air mixture to be appropriately known.

The engine 100 according to the present invention uses the intake air temperature/humidity sensor 6 disposed in the intake pipe 3 as the means for detecting the humidity in the intake pipe 3. This configuration enables detection of the humidity of the fuel-air mixture actually taken into the engine.

The engine 100 according to the present invention includes the intake air temperature/humidity sensor 6 disposed upstream of the compressor 7, or disposed upstream of the compressor 7 and downstream of the joint of the exhaust return pipe 32 and the intake pipe 3. This configuration enables accurate detection of the humidity of the intake air and the EGR flow rate before the compressor 7 and/or the like changes the intake air pressure.

The ECU 1 according to the present invention controls opening and closing of the exhaust return pipe 32 so that the exhaust gas will not return if the pressure downstream of the compressor 7 is at or above a set pressure. That is, an increase in the intake pipe pressure signal PIS causes the intake pipe threshold IGL to decrease (see FIG. 5), and the decrease in the intake pipe threshold IGL then prevents transition to the permitted mode unless the humidity index HII decreases to a lower value (see FIG. 6), thereby making the exhaust gas less likely to return. This configuration can reduce or eliminate an operation that, in effect, promotes dew condensation by performing EGR under a condition where dew condensation will occur.

The ECU 1 sets a permitted operation range (range in which the control device operates in the permitted mode) for allowing the exhaust gas to return, depending on the pressure downstream of the compressor 7 (i.e., the intake pipe pressure signal PIS) and on the humidity in the intake pipe 3 (i.e., humidity index HII). This configuration can provide suitable determination of a threshold condition of dew condensation with respect to the fuel-air mixture in the intake pipe 3. In addition, the ECU 1 sets the permitted operation range so that, in the permitted mode, a higher humidity in the intake pipe 3 results in a lower pressure downstream of the compressor 7 accordingly. Thus, the control device can determine with high accuracy the phenomenon in which the dew condensation condition shifts toward lower pressure with an increase in the humidity of the fuel-air mixture in the intake pipe 3.

The ECU 1 sets a prohibited operation range (range in which the control device operates in the prohibited mode) for prohibiting the exhaust gas from returning, depending on the pressure downstream of the compressor 7 (i.e., the intake pipe pressure signal PIS) and on the humidity in the intake pipe 3 (i.e., the humidity index HII). Specifically, the prohibited operation range is set so that, in the prohibited mode, a lower humidity in the intake pipe 3 results in a higher pressure downstream of the compressor 7 accordingly. Thus, the control device can determine with high accuracy the phenomenon in which the dew condensation condition shifts toward higher pressure with a decrease in the humidity of the fuel-air mixture in the intake pipe 3.

In a case in which, during an operation in the permitted mode, a threshold derived from a product of the pressure value represented by the detection signal of the intake pipe pressure sensor 12 and the humidity value represented by the detection signal of the intake air temperature/humidity sensor reaches a value at which dew condensation occurs, the ECU 1 reduces the EGR valve position value EVO to reduce the EGR flow rate. Thus, the dew condensation determination condition dependent on the humidity and on the pressure can be clarified, and thus the valve position value can be accurately increased and decreased.

### Reference Signs List

1 ECU
2 accelerator pedal position sensor
3 intake pipe
4 air flow sensor
5 regulating valve
6 intake air temperature/humidity sensor
7 compressor
8 intercooler
9 temperature-regulating pump
10 throttle
11 tumble valve
12 intake pipe pressure sensor
13 variable intake/exhaust lift valve
14 combustion chamber
15 piston
16 connecting rod
17 crankshaft
18 control shaft
19 ignition coil
20 ignition plug (including: combustion chamber pressure sensor or ion current sensor)
21 fuel pipe
22 fuel pump
23 fuel pressure sensor (including: temperature sensor)
24 common rail
25 injector
26 exhaust pipe
27 turbine (including: wastegate)
28 air-fuel ratio sensor
29 catalyst
30 exhaust temperature sensor
31 catalyst
32 exhaust return pipe
33 EGR cooler
34 EGR pressure sensor
35 EGR valve
36 EGR pressure sensor
37 cooling water pipe
38 cooling water pump
39 cooling water passage switching valve
40 crank angle sensor
41 knock sensor
42 cooling water temperature sensor
100 engine

## Claims

1. A control device for controlling an engine including an exhaust gas return mechanism that returns exhaust gas from an exhaust pipe to an intake pipe, the intake pipe including a compressor,
wherein the control device controls the exhaust gas return mechanism based on a pressure and on a humidity in the intake pipe.

2. The control device according to claim 1, wherein
the exhaust gas return mechanism is a valve mechanism, and the control device outputs a control signal for opening and closing of the valve mechanism to control an exhaust gas return flow rate or an exhaust gas return ratio.

3. The control device according to claim 1 or 2, wherein
the exhaust gas return mechanism is configured to return the exhaust gas from the exhaust pipe to a portion upstream of the compressor included in the intake pipe, and
the control device controls the exhaust gas return mechanism to return the exhaust gas from the exhaust pipe to the intake pipe.

4. The control device according to any one of claims 1 to 3, wherein
the engine includes an intake pipe pressure sensor, disposed downstream of the compressor, that detects the pressure in the intake pipe, and
the control device obtains the pressure in the intake pipe from the intake pipe pressure sensor.

5. The control device according to any one of claims 1 to 4, wherein
the intake pipe includes an intake humidity sensor that detects the humidity in the intake pipe, and
the control device obtains the humidity in the intake pipe from the intake humidity sensor.

6. The control device according to claim 5, wherein
the intake humidity sensor is disposed either at a location upstream of the compressor, or at a location upstream of the compressor and downstream of a joint of the exhaust gas return mechanism and the intake pipe, and
the control device includes a communication channel connecting the location at which the intake humidity sensor is disposed, with the control device.

7. The control device according to claim 1, 4, 5, or 6, wherein
the control device controls the exhaust gas return mechanism so that the exhaust gas will not return if a pressure downstream of the compressor is at or above a set pressure.

8. The control device according to claim 7, wherein
the control device sets a permitted operation range for controlling the exhaust gas return mechanism to return the exhaust gas, depending on the pressure downstream of the compressor and on the humidity in the intake pipe, and
the control device sets the permitted operation range so that, in the permitted operation range, a higher humidity in the intake pipe results in a lower pressure downstream of the compressor accordingly.

9. The control device according to claim 7 or 8, wherein
the control device sets a prohibited operation range for controlling the exhaust gas return mechanism not to return the exhaust gas, depending on the pressure downstream of the compressor and on the humidity in the intake pipe, and
the control device sets the prohibited operation range so that, in the prohibited operation range, a lower humidity in the intake pipe results in a higher pressure downstream of the compressor accordingly.

10. The control device according to claim 9, wherein the control device controls the exhaust gas return mechanism so that an index indicating the humidity in the intake pipe falls below a threshold derived from a product of a pressure value represented by a detection signal output by a sensor that detects the pressure in the intake pipe, and a humidity value represented by a detection signal output by a sensor that detects the humidity in the intake pipe.

11. The control device according to claim 1 or 6, wherein the control device controls the exhaust gas return mechanism so that an amount of the exhaust gas to be returned is reduced as the pressure in the intake pipe increases.

12. The control device according to claim 1, 6, or 11, wherein the control device controls the exhaust gas return mechanism so that a decrease by half of a pressure value represented by a detection signal output by a sensor that detects the pressure in the intake pipe doubles a humidity value represented by a detection signal output by a sensor that detects the humidity in the intake pipe.
